# EUROPÄISCHE PATENTSCHRIFT

(11) **EP 1 415 870 B1**
(45) Veröffentlichungstag und Bekanntmachung des Hinweises auf die Patenterteilung: **16.08.2006**
(21) Anmeldenummer: 03023688.9
(22) Anmeldetag: 17.10.2003
(51) Int. Cl.: B60R 21/20, B60Q 5/00

(54) **Lenkrad**
Steering wheel
Volant

(30) Priorität: 30.10.2002 DE 20216755 U
(43) Veröffentlichungstag der Anmeldung: 06.05.2004
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Kitzhofer, Thomas

(56) Entgegenhaltungen:
- EP-A- 1 164 054
- EP-A- 1 172 256
- DE-U- 20 116 306
- US-A- 5 431 438
- US-A1- 2002 113 419

## Beschreibung

Die Erfindung betrifft ein Lenkrad, mit einem eine sichtbare Vorderseite aufweisenden Gassackmodul mit einem Gasgeneratorträger, auf dem ein Gasgenerator montiert ist und mehreren Schaltern, wobei sich der Gasgeneratorträger bis zumindest nahe an die Vorderseite erstreckt.

Gasgeneratorträger sind Blech- oder Kunststoffteile, die sozusagen die Brücke zwischen dem Gasgenerator und dem Lenkradskelett bilden. Der Gasgenerator ist üblicherweise unmittelbar am Gasgeneratorträger montiert, und dieser steht direkt oder indirekt, letzteres vor allem bei einem sogenannten "floating horn module", mit dem Lenkradskelett in Verbindung.

Moderne Lenkräder werden zunehmend auch mit Schaltern versehen, z.B. zur Telefon- oder Radiobedienung oder zur Bedienung eines Bordcomputers. Diese Schalter sind üblicherweise links und rechts an das Gassackmodul angrenzend angeordnet. Da das Gassackmodul üblicherweise zur Hupenbetätigung beweglich ausgeführt ist, ist ein Spalt zwischen der Abdeckkappe und den Schaltern vorgegeben.

Die Montage der Schalter erfordert üblicherweise mehrere Teile, die es im übrigen noch schwieriger machen, den Spalt exakt vorzubestimmen und so klein wie möglich zu halten.

Lenkräder mit integrierten Schaltern sind aus dem Stand der Technik bekannt. So zeigt die EP 1 164 054 A1 ein Multifunktionslenkrad mit einer Schaltergruppe aus Fernbedienungsschaltern, die auf einer gemeinsamen Platine am Lenkradskelett angeordnet sind, wobei zur Reduzierung des Montageaufwands ein Hupkontaktschalter ebenfalls in die Platine der Schaltergruppe integriert ist.

Bei einem Lenkrad mit Gassackmodul gemäß der US 2002/0113419 A1 wird ein Hupkontakt zwischen einer Abdeckung des Gassackmoduls und einer lenkradfesten Tragplatte hergestellt, so daß zur Betätigung der Hupe nicht das gesamte Gassackmodul bewegt werden muß.

Die DE 201 16 306 U1 offenbart ein Fahrzeuglenkrad mit einer Lenkradnabe und mehreren Schaltern, die in ein gemeinsames, separates Schaltergehäuse integriert sind, welches z.B. an der Lenkradnabe befestigt ist.

In der gattungsgemäßen US 5 431 438 ist ein Lenkrad mit einem Gassackmodul gezeigt, bei dem ein singulärer Hupenschalter auf einem Fortsatz einer Tragplatte des Gassackmoduls angeordnet ist.

Aufgabe der Erfindung ist es, einerseits ein Lenkrad zu schaffen, bei dem weniger Teile notwendig sind und bei dem andererseits der Spalt zwischen Abdeckkappe und den Schaltern klein und in engen Grenzen vorbestimmbar ist, was möglichst bei gleichzeitig geringem Montageaufwand erzielt werden soll.

Dies wird durch ein Lenkrad nach Auspruch 1. Der Gasgeneratorträger kann sich auch bis zur Vorderseite der Modulabdeckung erstrecken und seitlich an diese anschließen. Beim erfindungsgemäßen Lenkrad bildet der Gasgeneratorträger gleichzeitig auch das Aufnahmegehäuse für die Schalter und hat damit eine Doppelfunktion. Anders ausgedrückt, das Aufnahmegehäuse für die Schalter wird so überdimensioniert, daß es gleichzeitig zur Aufnahme des Gasgenerators dient. Die bislang vorgesehenen zahlreichen Zwischenbleche, über die die Schalter mit dem Skelett verbunden waren, können entfallen. Damit ist auch die Zuordnung der Schalter zu dem Gassackmodul eindeutig vorgegeben, so daß keine langen Toleranzketten auftreten können.

Die Schalter können Leiterplatten, Mikroschalter mit eigenem Außengehäuse, Druckstücke, Tastenschalter oder dergleichen sein, also separate im gemeinsamen Aufnahmegehäuse untergebrachte Teile.

Gemäß der bevorzugten Ausfiihrungsform haben die Schalter eigene Außengehäuse, die in vorzugsweise komplementär ausgebildeten Ausnehmungen, die ihnen einzeln zugeordnet sind, aufgenommen werden. In diese Ausnehmungen ragen die Außengehäuse zumindest teilweise hinein. Eine formschlüssige Verbindung zwischen dem Außengehäuse und seiner Ausnehmung führt zu einer exakten Lagepositionierung und einer sehr einfachen Montage, denn der Schalter muß nur noch mit seinem Außengehäuse in die Ausnehmung gesteckt werden. Dies kann beispielsweise dadurch erfolgen, daß das Aufnahmegehäuse entsprechende Ausnehmungen besitzt oder indem eine Aufnahmeplatte benutzt wird, die entsprechende Ausnehmungen hat, in die wiederum die Außengehäuse der Schalter eingesetzt werden. Die Aufnahmeplatte mit den auf ihr formschlüssig positionierten Schaltern ergibt so eine Art Multifunktionsschaltereinheit, die vormontiert werden kann. Diese Einheit wird dann in das gemeinsame Aufnahmegehäuse gesetzt, wobei zwischen der Aufnahmeplatte und dem Aufnahmegehäuse ebenfalls eine formschlüssige Verbindung vorgesehen sein kann, um ein Ausrichten von Aufnahmeplatte zu Gasgeneratorträger zu vermeiden.

Die Ausnehmungen haben, gemäß der bevorzugten Ausführungsform, eine quadratische oder rechteckige Form, um eine Verdrehung der Schalter bei der Montage oder im Betrieb zu verhindern.

Der in die Ausnehmung hineinragende Teil des Außengehäuses hat vorzugsweise eine der Ausnehmung entsprechende Außenkontur, um den Formschluß zu erzielen.

Es können am Gasgeneratorträger oder der Aufnahmeplatte mehrere in einer Reihe angeordnete Ausnehmungen, zur Aufnahme benachbarter Außengehäuse vorgesehen sein. Auch die benachbarten Schalter haben damit eine feste Position zueinander, wodurch ein geringer und gleichmäßiger Spaltabstand erzielbar ist.

Ferner kann vorgesehen sein, daß der Gasgeneratorträger die Form eines einseitig offenen Topfes hat. Am Rand der Öffnung steht wenigstens ein angeformter Abschnitt ab, der die Ausnehmung trägt. In den "Topf" können dann Gasgenerator und Gassack eingelegt werden.

Das Lenkrad hat, bezogen auf die Geradeausstellung, eine linke und eine rechte Seite. Der Gasgeneratorträger kann, was besonders vorteilhaft ist, sowohl an einem linken als auch an einem rechten Rand je ein Aufnahmegehäuse zur Unterbringung eines linken bzw. rechten Schalterfeldes wenigstens abschnittsweise bilden.

Das gesamte Aufnahmegehäuse wird vorzugsweise dadurch komplettiert, daß vorderseitig Schalterkappen vorgesehen sind, die z.B. am Generatorträger geführt sind. Auch dies schafft eine exakte Lageausrichtung der Schalterkappen zu dem Modul.

Eine Ausführungsform sieht auch vor, daß eine Abdeckkappe vorgesehen ist, welche die Austrittsöffnung für den Gassack verschließt, wobei die Abdeckkappe am Gasgeneratorträger fixiert ist. Das bedeutet, zwischen Abdeckkappe und den üblicherweise unmittelbar angrenzenden Schalterkappen gibt es nur ein Teil, auf dem beide befestigt sind, nämlich den Gasgeneratorträger.

Eine Vereinfachung des Aufbaus bezüglich des Hupenschalters kann dadurch erzielt werden, daß der Hupenschalter ebenfalls am Generatorträger befestigt ist, beispielsweise gegenüber der Unterseite des Aufnahmegehäuses vorsteht und gegen einen bei Verschiebung nicht beweglichen Teil des Lenkrads zur Auslösung des Hupenschalters stoßen kann. Dies erfolgt dann, wenn der reversibel verschieblich gelagerte Gasgeneratorträger in axialer Richtung gedrückt und verschoben wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein erfindungsgemäßes Fahrzeuglenkrad,
- Figur 2 eine Draufsicht auf den Gasgeneratorträger, der im erfindungsgemäßen Lenkrad verbaut ist,
- Figur 3 eine Schnittansicht durch den Nabenbereich des in Figur 1 gezeigten Lenkrads, und
- Figur 4 einen Schnitt durch ein erfindungsgemäßes Lenkrad gemäß einer zweiten Ausführungsform.

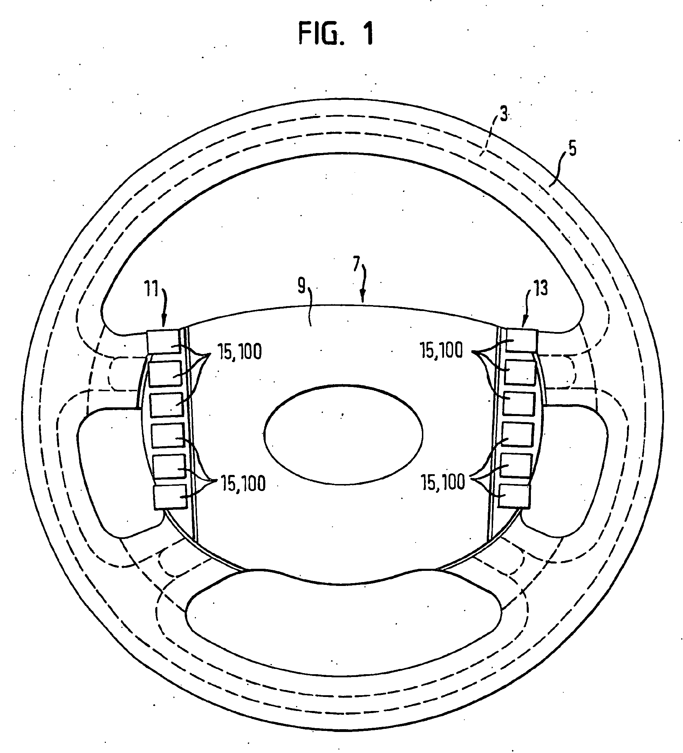

In Figur 1 ist ein Fahrzeuglenkrad dargestellt, welches ein Lenkradskelett 3 aus Blech oder Gußmaterial aufweist, das mit einer Umschäumung 5 versehen ist. Im Bereich der Lenkradnabe 7 ist ein Gassackmodul mit einer Abdeckkappe 9 vorgesehen. Links und rechts seitlich der Abdeckkappe 9 ist jeweils eine Reihe 11, 13 von Schaltern 15 (Schalterfeld) vorgesehen, die zur Bedienung eines Bordcomputers, des Telefons, des Radios usw. vorgesehen sind.

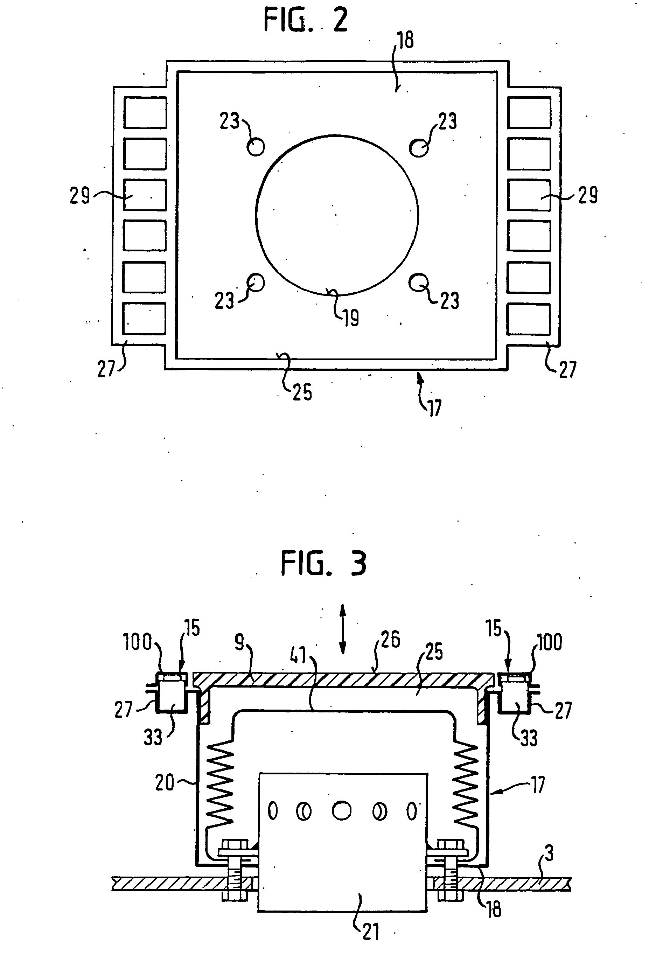

In Figur 3 ist ein schematischer Querschnitt durch das Fahrzeuglenkrad im Bereich der Nabe dargestellt, wobei die Umschäumung 5 weggelassen ist. Nabenseitig ist unmittelbar am Skelett 3 oder an einem Zwischenblech ein topfförmiger Gasgeneratorträger 17 befestigt, wobei diese Befestigung auch so ausgeführt sein kann, daß der Gasgeneratorträger zur Betätigung einer Hupe in Pfeilrichtung verschiebbar gegenüber dem Skelett 3 ist. Der Gasgeneratorträger 17 ist aus Kunststoff und besitzt, wie Figur 2 zu entnehmen ist, einen Boden 18 mit einer Aufnahmeöffnung 19, und eine geschlossen umlaufende Seitenwand 20. Ein Gasgenerator 21 ragt teilweise durch die Aufnahmeöffnung 19. Mit 23 sind Befestigungsöffnungen für den Gasgenerator 21 bezeichnet. Ein Gassack 41, der Gasgenerator 21, der Gasgeneratorträger 17 und die Abdeckkappe 9 bilden im wesentlichen das Gassackmodul.

Der hier gezeigte Gasgeneratorträger 17 ist also ein topfförmiges Bauteil, an dessen Boden 18 der Gasgenerator 21 direkt oder unter Zwischenlegung eines weiteren Elements (Gassackwand, Halteteil, Verstärkungsring und dergleichen) befestigt wird. An diesen Boden schließt sich dann die Seitenwand 20 an, die sich nach oben wenigstens bis in die Nähe der sichtbaren Vorderseite des Gassackmoduls erstreckt.

Am oberen Rand der der Abdeckkappe 9 nahen Öffnung 25 des topfförmigen Gasgeneratorträgers 17 und damit nahe der durch die Sichtseite der Abdeckkappe 9 gebildeten Vorderseite 26 des Moduls sind links und rechts Abschnitte 27 angeformt, die seitlich nach außen abstehen. Diese Abschnitte 27 sind jeweils schalenförmig und weisen rechteckige oder quadratische Ausnehmungen 29 auf, die eine linke und eine rechte Reihe von Ausnehmungen 29 ergeben. In jede dieser Ausnehmungen 29 ist ein einzelner, als separate, geschlossene Einheit ausgeführter Schalter 15 mit seinem Außengehäuse 33 eingesetzt, wobei das Außengehäuse 33 jedes Schalters 15 in die entsprechende Ausnehmung 29 hineinragt und formschlüssig vom Gasgeneratorträger 17 erfaßt wird.

Die Form der Außengehäuse 33 ist zumindest in dem Teil, in dem es in die Ausnehmung 29 hineinragt, komplementär zur Ausnehmung 29 ausgeführt.

Die durch die Abschnitte 27 gebildeten Unterteile von gemeinsamen Aufnahmegehäusen von Schaltern 15 werden durch Schalterkappen 100 geschlossen. Es kann für jede Seite eine einzige Schalterkappe 100 vorgesehen sein, die einzelne, den einzelnen Schaltern 15 zugeordnete Abschnitte aufweist. Darüber hinaus wäre es auch möglich, für jeden Schalter 15 eine eigene Schalterkappe 100 auszubilden. Die Schalterkappen 100 sind vorzugsweise durch Formschluß am Gasgeneratorträger 17 positioniert und befestigt.

Der Generatorträger 17 dient auch der Aufnahme des Gassacks 41. Die Abdeckkappe 9 schließt das durch den Gasgeneratorträger gebildete topfförmige Aufnahmegehäuse und grenzt seitlich unmittelbar an die Reihen 11, 13 von Schaltern 15 an.

Die Abdeckkappe 9 grenzt seitlich unmittelbar an die Reihen 11, 13 von Schaltern 15 an und wird vorzugsweise auch unmittelbar am Gasgeneratorträger 17 positioniert, so daß nur eine sehr kurze Toleranzkette zwischen dem Rand der Abdeckkappe 9 und dem benachbarten Außengehäuse 33 jedes Schalters 15 oder der Abdeckkappe 100 vorhanden ist.

Ein weiterer Vorteil der gezeigten Lösung zur Unterbringung und Positionierung der Schalter 15 besteht darin, daß der vorhandene Bauraum durch Reduzierung der Einzelteile sehr gut ausgenutzt wird. Der Generatorträger 17 und die Schalter 15 können auch als separat vormontierte Baugruppe ausgeführt sein.

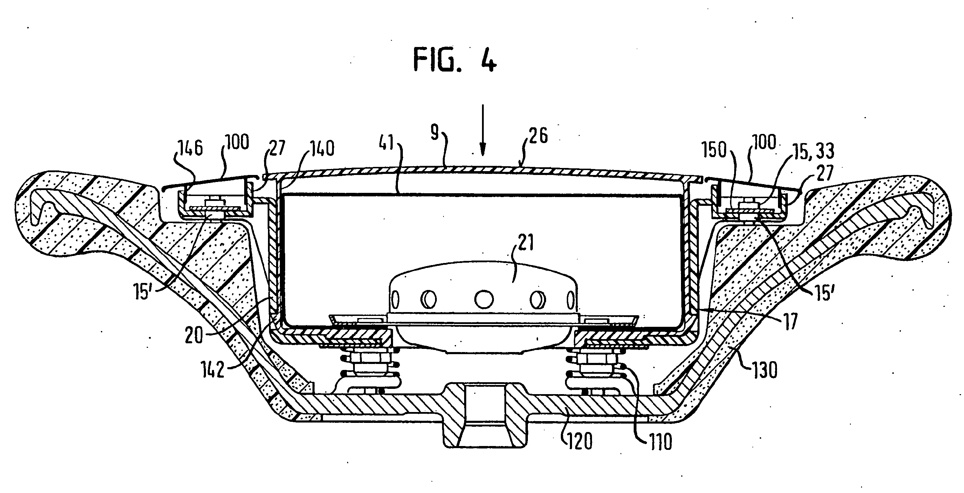

Bei der Ausführungsform nach Figur 4 werden die zuvor bereits im Zusammenhang mit den Figuren 1 bis 3 eingeführten Bezugszeichen verwendet, sofern es sich um funktionsgleiche Teile handelt.

In Figur 4 ist die sogenannte "floating-horn" Lagerung des Gassackmoduls gezeigt, d.h. das Gassackmodul ist in Achsrichtung gegen die Kraft von Federn 110 nach unten gegenüber dem Skelett 120 und seiner Umschäumung 130 verschiebbar.

Gut zu erkennen ist in Figur 4, daß die Abdeckkappe 9 neben der Vorderwand auch noch eine Umfangswand, die vorzugsweise umfangsmäßig geschlossen ist, hat, welche mit dem Bezugszeichen 140 versehen ist. Diese Umfangswand 140 liegt innenseitig an der Seitenwand 20 des Generatorträgers 17 an, wodurch eine gute Positionierung dieser beiden Teile zueinander ermöglicht ist. Am freien Rand hat die Umfangswand 140 hakenförmige Fortsätze 142, die in zugeordnete Öffnungen in der Seitenwand 20 einrasten können, wodurch eine Schnappverbindung gebildet ist.

Auch die schalenförmigen Abschnitte, die am linken und rechten Rand, bezogen auf die Geradeausstellung des Lenkrads, am Gasgeneratorträger 17 einstückig angeformt sind, sind gut zu erkennen. Die schalenförmigen Abschnitte haben nicht nur einen Boden, sondern auch eine Seitenwand, an der innenseitig Stege 146 der Schalterkappen 100 anliegen und geführt sind.

Im Gegensatz zu der Ausführungsform nach den Figuren 1 bis 3 sind die Schalter 15 auf jeder Seite auf einer gemeinsamen Aufnahmeplatte 150 vormontiert, die Ausnehmungen 29 entsprechend Figur 2 zur Aufnahme der Außengehäuse 33 der Schalter 15 haben können. Die Schalter 15 und die zugeordnete Aufnahmeplatte 150 bilden eine vormontierte Einheit. Auf der Unterseite jeder Schalterplatte 150 ist ein Hupenschalter 15' montiert, der durch ein Loch im Boden des Abschnitts 27 hindurchragt und gegenüber der Unterseite des Bodens nach unten vorsteht. Wird das gesamte Modul in Pfeilrichtung nach unten gedrückt, so kommt der Hupenschalter 15' in Kontakt mit einer Gegenfläche an der Umschäumung 130 und wird betätigt.

Auch bei der Ausführungsform nach Figur 4 wird das gemeinsame Aufnahmegehäuse für zahlreiche Schalter durch einen Abschnitt 27 (Unterschale) und eine Schalterkappe 100 (Oberschale) gebildet.

## Patentansprüche

1. Lenkrad, aufweisend
ein eine sichtbare Vorderseite (26) aufweisendes Gassackmodul mit einer die Vorderseite (26) definierenden Abdeckkappe,
einem Gasgeneratorträger (17), auf dem ein Gasgenerator (21) montiert ist, und
mehreren Schaltern (15),
wobei sich der Gasgeneratorträger (17) bis zumindest nahe an die Vorderseite (26) erstreckt,
**dadurch gekennzeichnet, daß** der Gasgeneratorträger (17) zumindest einen Abschnitt eines gemeinsamen Aufnahmegehäuses zur Unterbringung der mehreren, benachbarten Schalter (15) bildet und eine schalenförmige Aufnahme hat, in der die Schalter (15) untergebracht und positioniert sind.

2. Lenkrad nach Anspruch 1, **dadurch gekennzeichnet, daß** die Außengehäuse (33) der Schalter (15) in einzelnen, zugeordneten Ausnehmungen (29) aufgenommen sind.

3. Lenkrad nach Anspruch 2, **dadurch gekennzeichnet, daß** der in die Ausnehmung (29) hineinragende Teil jedes Außengehäuses (33) eine seiner Ausnehmung (29) entsprechende Außenkontur hat.

4. Lenkrad nach einem der vorhergehenden Ansprüche, **dadurch gekennzeichnet, daß** der Gasgeneratorträger (17) mehrere in wenigstens einer Reihe (11, 13) angeordnete Ausnehmungen (29) zur Aufnahme benachbarter Außengehäuse (33) von Schaltern (15) hat.

5. Lenkrad nach einem der vorhergehenden Ansprüche, **dadurch gekennzeichnet, daß** der Gasgeneratorträger (17) zwei gegenüberliegende Seiten hat, an denen jeweils eine Reihe von Ausnehmungen (29) zur Aufnahme von Außengehäusen (33) von Schaltern (15) vorgesehen ist.

6. Lenkrad nach einem der vorhergehenden Ansprüche, **dadurch gekennzeichnet, daß** die Außengehäuse (33) auf einer gemeinsamen Aufnahmeplatte (150) befestigt sind und zusammen mit dieser im Aufnahmegehäuse untergebracht sind.

7. Lenkrad nach Anspruch 6, **dadurch gekennzeichnet, daß** die Aufnahmeplatte (150) mehrere in wenigstens einer Reihe (11, 13) angeordnete Ausnehmungen (29) zur Aufnahme benachbarter Außengehäuse (33) hat.

8. Lenkrad nach einem der vorhergehenden Ansprüche, **dadurch gekennzeichnet, daß** der Gasgeneratorträger (17) die Form eines einseitig offenen Topfes mit einem Boden und einer Seitenwand (20) hat und am Rand seiner Öffnung (25) wenigstens ein einstückig angeformter Abschnitt (27) absteht, der einen Teil des Aufnahmegehäuses bildet.

9. Lenkrad nach einem der vorhergehenden Ansprüche, **dadurch gekennzeichnet, daß** der Gasgeneratorträger (17) aus Kunststoff ist.

10. Lenkrad nach einem der vorhergehenden Ansprüche, **dadurch gekennzeichnet, daß** das Lenkrad eine, bezogen auf die Geradeausstellung linke und rechte Seite hat und daß der Gasgeneratorträger (17) sowohl an einem linken als auch an einem rechten Rand je ein Aufnahmegehäuse zur Unterbringung eines linken bzw. rechten Schalterfeldes wenigstens abschnittsweise bildet.

11. Lenkrad nach einem der vorhergehenden Ansprüche, **dadurch gekennzeichnet, daß** das bzw. die Aufnahmegehäuse vorderseitig durch Schalterkappen (100) geschlossen ist bzw. sind.

12. Lenkrad nach einem der vorhergehenden Ansprüche, **dadurch gekennzeichnet, daß** der Gasgeneratorträger (17) in Richtung der Lenkradachse reversibel verschieblich gelagert ist und ein gegenüber der Unterseite des Aufnahmegehäuses vorstehender Hupenschalter (15') gegen einen bei Verschiebung nicht beweglichen Teil des Lenkrads zur Auslösung des Hupenschalters (15') stoßen kann.

## Claims

1. A steering wheel, comprising
a gas bag module having a visible front side (26) and a covering cap defining the front side (26),
a gas generator carrier (17), on which a gas generator (21) is mounted, and
several switches (15),
the gas generator carrier (17) extending to at least close to the front side (26),
**characterized in that** the gas generator carrier (17) forms at least a section of a shared receiving housing to accommodate the several adjacent switches (15) and has a dish-shaped mounting in which the switches (15) are housed and positioned.

2. The steering wheel according to Claim 1, **characterized in that** the outer housings (33) of the switches (15) are received in individual, associated recesses (29).

3. The steering wheel according to Claim 2, **characterized in that** the portion of each outer housing (33) that projects into the recess (29) has an outer contour corresponding to its recess (29).

4. The steering wheel according to any of the preceding claims, **characterized in that** the gas generator carrier (17) has several recesses (29) arranged in at least one row (11, 13), to receive adjacent outer housings (33) of switches (15).

5. The steering wheel according to any of the preceding claims, **characterized in that** the gas generator carrier (17) has two opposite sides, each of which has provided thereon a row of recesses (29) to receive outer housings (33) of switches (15).

6. The steering wheel according to any of the preceding claims, **characterized in that** the outer housings (33) are fastened on a shared mounting plate (150) and are accommodated in the receiving housing together with the mounting plate.

7. The steering wheel according to Claim 6, **characterized in that** the mounting plate (150) has several recesses (29) arranged in at least one row (11, 13), to receive adjacent outer housings (33).

8. The steering wheel according to any of the preceding claims, **characterized in that** the gas generator carrier (17) has the shape of a cup open on one side, with a base and a side wall (20), and at least one integrally molded section (27) projects from the rim of its opening (25) and constitutes a part of the receiving housing.

9. The steering wheel according to any of the preceding claims, **characterized in that** the gas generator carrier (17) is made of plastic.

10. The steering wheel according to any of the preceding claims, **characterized in that** the steering wheel has left and right sides, in relation to a steering wheel position when driving straight ahead, and that the gas generator carrier (17), both on a left and on a right edge, at least partially forms respective receiving housings to accommodate left and right switch panels.

11. The steering wheel according to any of the preceding claims, **characterized in that** the receiving housing or housings is/are closed on the front side by switch caps (100).

12. The steering wheel according to any of the preceding claims, **characterized in that** the gas generator carrier (17) is mounted so as to be reversibly displaceable in the direction of the steering wheel axis, and a horn switch (15') projecting with respect to the underside of the receiving housing can abut against a part of the steering wheel which is not movable during displacement, to trigger the horn switch (15').

## Revendications

1. Volant de direction, comportant
un module de coussin à gaz présentant une face antérieure (26) visible avec un couvercle défini par la face antérieure (26),
un support de générateur de gaz (17) sur lequel le générateur de gaz (21) est monté et
plusieurs commutateurs (15),
le support de générateur de gaz (17) s'étendant jusqu'à proximité au moins de la face antérieure (26),
**caractérisé en ce que** le support de générateur de gaz (17) forme au moins un tronçon d'un boîtier de réception commun pour loger les plusieurs commutateurs (15) voisins et a un logement en forme de coque dans lequel les commutateurs (15) sont logés et positionnés.

2. Volant de direction selon la revendication 1, **caractérisé en ce que** les boîtiers extérieurs (33) des commutateurs (15) sont reçus dans des évidements (29) individuels associés.

3. Volant de direction selon la revendication 2, **caractérisé en ce que** la partie faisant saillie dans l'évidement (29), de chaque boîtier extérieur (33), a un contour extérieur correspondant à son évidement (29).

4. Volant de direction selon l'une des revendications précédentes, **caractérisé en ce que** le support de générateur de gaz (17) a plusieurs évidements (29) agencés au moins dans une rangée (11, 13) pour recevoir des boîtiers extérieurs (33) de commutateurs (15).

5. Volant de direction selon l'une des revendications précédentes, **caractérisé en ce que** le support de générateur de gaz (17) a deux côtés opposés sur chacun desquels est prévue une rangée d'évidements (29) pour recevoir des boîtiers extérieurs (33) de commutateurs (15).

6. Volant de direction selon l'une des revendications précédentes, **caractérisé en ce que** les boîtiers extérieurs (33) sont fixés sur une place de réception (150) commune et sont logés conjointement avec celle-ci dans le boîtier de réception.

7. Volant de direction selon la revendication 6, **caractérisé en ce que** la plaque de réception (150) a plusieurs évidements (29) agencés dans au moins une rangée (11, 13) pour recevoir des boîtiers extérieurs (33) voisins.

8. Volant de direction selon l'une des revendications précédentes, **caractérisé en ce que** le support de générateur de gaz (17) a la forme d'un pot ouvert d'un côté avec un fond et une paroi latérale (20) et sur le bord de son ouverture (25) fait saillie au moins un tronçon (27) conformé d'un seul tenant qui forme une partie du boîtier de réception.

9. Volant de direction selon l'une des revendications précédentes, **caractérisé en ce que** le support de générateur de gaz (17) est en matière plastique.

10. Volant de direction selon l'une des revendications précédentes, **caractérisé en ce que** le volant de direction a un côté gauche et un côté droit par rapport à la position de roulement tout droit, et **en ce que** le support de générateur de gaz (17) forme tant sur le côté gauche que sur le côté droit un boîtier de réception respectif pour loger au moins en partie un champ de commutateurs droit et un champ de commutateurs gauche, respectivement.

11. Volant de direction selon l'une des revendications précédentes, **caractérisé en ce que** le ou les boîtier(s) de réception est/sont fermés sur la face antérieure par des capuchons de commutateurs.

12. Volant de direction selon l'une des revendications précédentes, **caractérisé en ce que** le support de générateur de gaz (17) est monté à déplacement réversible en direction de l'axe de volant de direction, et un commutateur de klaxon (15') faisant saillie par rapport à la face inférieure du boîtier de réception peut heurter contre une partie du volant de direction, qui n'est pas mobile lors d'un déplacement, pour déclencher le commutateur de klaxon (15').
